# EUROPEAN PATENT APPLICATION

(11) **EP 4 604 149 A1**
(43) Date of publication of application: **20.08.2025**
(21) Application number: 24214462.4
(22) Date of filing: 21.11.2024
(51) Int. Cl.: H01G 4/30, H01G 4/232, H01G 4/12, H01G 4/012, H01G 4/224

(54) **MULTILAYER ELECTRONIC COMPONENT**

(30) Priority: 22.11.2023 KR 20230163085
(71) Applicant: Samsung Electro-Mechanics Co., Ltd., Gyeonggi-do (KR)
(72) Inventor: Choi, Hyung Jong, Suwon-si, Gyeonggi-do (KR); Lee, Chung Eun, Suwon-si, Gyeonggi-do (KR); Kim, Yong Min, Suwon-si, Gyeonggi-do (KR); Yun, Kwan Hee, Suwon-si, Gyeonggi-do (KR); Kim, Seon Ho, Suwon-si, Gyeonggi-do (KR)
(74) Representative: Grünecker Patent- und Rechtsanwälte PartG mbB

(57) **Abstract**

A multilayer electronic component includes a first external electrode including a first connection portion disposed on a third surface of a body, and a first band portion extending from the first connection portion onto a portion of a first surface of the body and a portion of a second surface of the body, wherein the first external electrode includes a first electrode layer connected to the first internal electrode, and a first conductive resin layer disposed on the first electrode layer in the first band portion and including a second conductive metal and a thermosetting resin, the first electrode layer includes a first conductive metal and glass, and the first conductive resin layer is not disposed on the first connection portion.

## Description

### CROSS-REFERENCE TO RELATED APPLICATION(S)

This application claims benefit of priority to Korean Patent Application No. 10-2023-0163085 filed on November 22, 2023 in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, may be a chip condenser mounted on the printed circuit boards of various types of electronic products, such as image display devices including a liquid crystal display (LCD), a plasma display panel (PDP), or the like, a computer, a smartphone, a mobile phone, an infotainment system, or the like, and serving to charge or discharge electricity therein or therefrom.

In the conventional case, attempts were made to thin an external electrode of a multilayer electronic component, form a conductive resin layer on upper and lower surfaces of a body to improve bending strength of the multilayer electronic component, and directly plate a side surface of the body.

When a conductive resin layer is first formed on upper and lower surfaces of a body and then a sintered electrode is formed on a side surface of the body, a problem may occur in which the conductive resin layer is combusted at a sintering temperature of the sintered electrode. Meanwhile, when plating is performed directly on the side surface of the body, instead of the sintered electrode, an acidic solution included in a plating solution may penetrate into the body, deteriorating reliability of the multilayer electronic component.

In addition, when plating is performed directly on the side surface of the body, a plating layer may grow smoothly in a region to which one end of an internal electrode is exposed, but in a cover portion, which may be a side portion of the body to which the internal electrode is not exposed, the plating layer may not grow smoothly. As a result, it may be difficult to form a thin and uniform plating layer.

### SUMMARY

An aspect of the present disclosure is to solve a problem making it difficult to form a sintered electrode on a side surface of a body when an external electrode is prepared by first forming a conductive resin layer on upper and lower surfaces of the body.

An aspect of the present disclosure is to solve a problem of a plating layer not being smoothly grown in a cover portion, which is a side portion of a body to which an internal electrode is not exposed, when a conductive resin layer is first formed on upper and lower surfaces of the body, and plating is performed directly on a side surface of the body.

The purposes of the present disclosure are not limited to the above-described contents, and can be more easily understood in a process of explaining specific embodiments of the present disclosure.

According to an aspect of the present disclosure, a multilayer electronic component includes a body including a dielectric layer and first and second internal electrodes alternately disposed with the dielectric layer in a first direction, the body including a first surface and a second surface opposing each other in the first direction, a third surface and a fourth surface, connected to the first and second surfaces and opposing each other in a second direction, and a fifth surface and a sixth surface, connected to the first to fourth surfaces and opposing each other in a third direction; a first external electrode including a first connection portion disposed on the third surface, and a first band portion extending from the first connection portion onto a portion of the first surface and a portion of the second surface; and a second external electrode including a second connection portion disposed on the fourth surface, and a second band portion extending from the second connection portion onto a portion of the first surface and a portion of the second surface, wherein the first external electrode includes a first electrode layer connected to the first internal electrode, and a first conductive resin layer disposed on the first electrode layer in the first band portion, the first conductive resin layer including a second conductive metal and a thermosetting resin, the second external electrode includes a second electrode layer connected to the second internal electrode, and a second conductive resin layer disposed on the second electrode layer in the second band portion, the second conductive resin layer including the second conductive metal and the thermosetting resin, the first electrode layer and the second electrode layer include a first conductive metal and glass, the first conductive resin layer is not disposed on the first connection portion, and the second conductive resin layer is not disposed on the second connection portion.

According to another aspect of the present disclosure, a multilayer electronic component includes a body including a dielectric layer and first and second internal electrodes alternately disposed with the dielectric layer in a first direction, the body including a first surface and a second surface opposing each other in the first direction, a third surface and a fourth surface, connected to the first and second surfaces and opposing each other in a second direction, and a fifth surface and a sixth surface, connected to the first to fourth surfaces and opposing each other in a third direction; and an external electrode disposed on the body, wherein the external electrode includes a conductive resin layer disposed on the first and second surfaces and including a second conductive metal and a thermosetting resin, and an electrode layer disposed on the third and fourth surfaces to extend from the third and fourth surfaces onto the conductive resin layer, and the electrode layer is free of glass, the body includes a capacitance forming portion overlapping the first and second internal electrodes in the first direction, and cover portions disposed on a first surface and a second surface of the capacitance forming portion in the first direction, and the cover portions include a first cover electrode and a second cover electrode spaced apart from each other in the second direction.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an embodiment of the present disclosure.
FIG. 2 is a cross-sectional view of FIG. 1, taken along line I-I'.
FIG. 3 is an enlarged view of portion P in FIG. 2.
FIG. 4 is a cross-sectional view of FIG. 1, taken along line II-II'.
FIG. 5 is an exploded perspective view illustrating a body according to an embodiment.
FIG. 6 is a perspective view schematically illustrating a multilayer electronic component according to another embodiment of the present disclosure.
FIG. 7 is a cross-sectional view of FIG. 6, taken along line III-III'.
FIG. 8 is a cross-sectional view of a multilayer electronic component according to an embodiment, corresponding to FIG. 7.

### DETAILED DESCRIPTION

Hereinafter, embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. In the drawings, the shapes and dimensions of elements may be exaggerated for clarity, and the same reference numerals will be used throughout to designate the same or like elements.

In addition, in order to clearly describe the present disclosure in the drawings, the contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

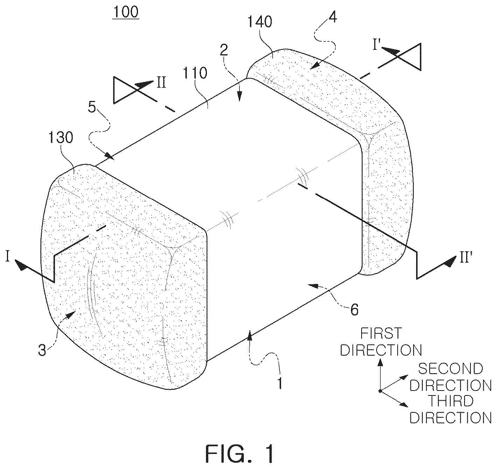

FIG. 1 is a perspective view schematically illustrating a multilayer electronic component according to an embodiment of the present disclosure.

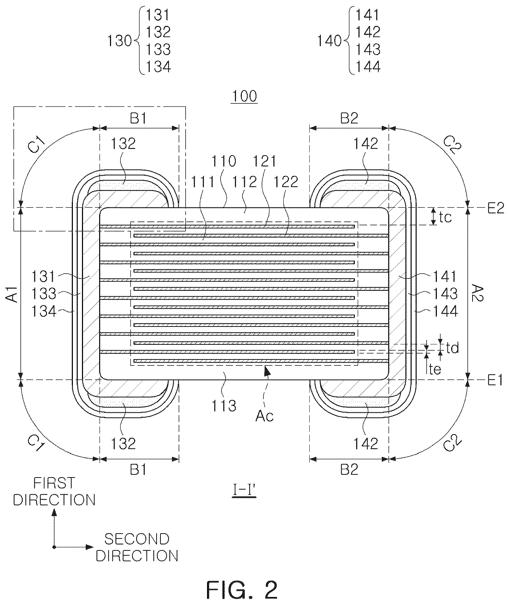

FIG. 2 is a cross-sectional view of FIG. 1, taken along line I-I'.

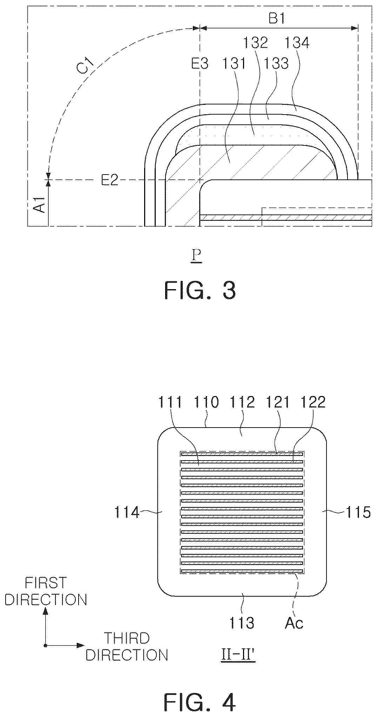

FIG. 3 is an enlarged view of portion P in FIG. 2.

FIG. 4 is a cross-sectional view of FIG. 1, taken along line II-II'.

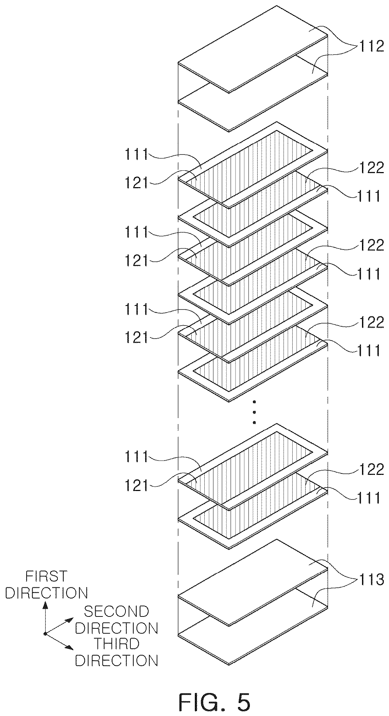

FIG. 5 is an exploded perspective view illustrating a body according to an embodiment.

In the drawing, a first direction may be defined as a direction in which first and second internal electrodes are alternately arranged with a dielectric layer interposed therebetween, or a thickness T direction, and, among second and third directions, perpendicular to the first direction, the second direction may be defined as a length L direction, and the third direction may be defined as a width W direction.

Hereinafter, a multilayered electronic component according to an embodiment of the present disclosure, a multilayered electronic component according to another embodiment of the present disclosure, and various examples thereof will be described in detail with reference to FIGS. 1 to 5.

A multilayer electronic component 100 according to an embodiment of the present disclosure may include a body 110 including a dielectric layer 111 and first and second internal electrodes 121 and 122 alternately disposed with the dielectric layer in a first direction, and including a first surface 1 and a second surface 2 opposing each other in the first direction, a third surface 3 and a fourth surface 4, connected to the first and second surfaces and opposing each other in a second direction, and a fifth surface 5 and a sixth surface 6, connected to the first to fourth surfaces and opposing each other in a third direction; a first external electrode 130 including a first connection portion A1 disposed on the third surface, and a first band portion B1 extending from the first connection portion onto a portion of the first surface and a portion of the second surface; and a second external electrode 140 including a second connection portion A2 disposed on the fourth surface, and a second band portion B2 extending from the second connection portion onto a portion of the first surface and a portion of the second surface, wherein the first external electrode includes a first electrode layer connected to the first internal electrode, and a first conductive resin layer 132 disposed on the first electrode layer in the first band portion and including a second conductive metal and a thermosetting resin, the second external electrode includes a second electrode layer connected to the second internal electrode, and a second conductive resin layer 142 disposed on the second electrode layer in the second band portion and including the second conductive metal and the thermosetting resin, the first electrode layer and the second electrode layer include a first conductive metal and glass, the first conductive resin layer is not disposed on the first connection portion, and the second conductive resin layer is not disposed on the second connection portion.

Referring to FIG. 2, the body 110 may include the dielectric layer 111, and the internal electrodes 121 and 122 alternately disposed with the dielectric layer 111 in the first direction.

Although the specific shape of the body 110 is not particularly limited, the body 110 may have a hexahedral shape or the like, as illustrated. Due to shrinkage of ceramic powder particles included in the body 110 during a sintering process, the body 110 may not have a perfectly straight hexahedral shape, but may have a substantially hexahedral shape.

The body 110 may include first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2, connected to the third and fourth surfaces 3 and 4, and opposing each other in the third direction.

A plurality of dielectric layers 111 forming the body 110 may be in a sintered state, and boundaries between adjacent dielectric layers 111 may be integrated to such an extent that it may be difficult to identify the same without using a scanning electron microscope (SEM).

A raw material for forming the dielectric layer 111 is not particularly limited, as long as sufficient capacitance may be obtained therewith. For example, a barium titanate-based material, a lead composite perovskite-based material, a strontium titanate-based material, or the like may be used. The barium titanate-based material may include a BaTiO₃-based ceramic powder, and examples of the ceramic powder may include BaTiO₃, or (Ba₁₋ₓCaₓ)TiO₃(0<x<1), Ba(Ti_{1-y}Ca_{y})O₃(0<y<1), (Ba₁₋ₓCaₓ)(Ti_{1-y}Zr_{y})O₃(0<x<1, 0<y<1), Ba (Ti_{1-y}Zr_{y})O₃(0<y<1), or the like, in which calcium (Ca), zirconium (Zr), or the like is partially dissolved in BaTiOs, or the like.

In addition, various ceramic additives, organic solvents, binders, dispersants, or the like may be added to the powder of barium titanate (BaTiO₃), and the like, as the raw material for forming the dielectric layer 111.

An average thickness td of the dielectric layer 111 is not particularly limited.

For the purpose of miniaturization and high capacitance of the multilayer electronic component 100, the average thickness td of the dielectric layer 111 may be 0.35 um or less, and to improve reliability of the multilayer electronic component 100 under high temperature and high pressure, the average thickness td of the dielectric layer 111 may be 3 um or more.

The average thickness td of the dielectric layer 111 may be measured by scanning images of cross-sections (L-T plane) in third and first directions of the body 110 using a scanning electron microscope (SEM).

For example, the average thickness td of the dielectric layer 111 may be determined by defining five points, one reference point, two points to the left thereto, and two points to the right thereto, at equal intervals around the one reference point, measuring thicknesses of the points, and calculating an average value therefrom, based on a point in which a length direction center line of the body and a thickness direction center line of the body meet, for a total of five dielectric layers, including one dielectric layer, two dielectric layers thereon, and two dielectric layers therebelow, based on the one dielectric layer provided at the point at which the length direction center line of the body and the thickness direction center line of the body meet, among dielectric layers extracted from an image acquired by scanning a cross-section in length and thickness directions (L-T) cut from a central portion in a width direction of the body 110 using a scanning electron microscope (SEM).

The internal electrodes 121 and 122 may be alternately disposed with the dielectric layer 111 interposed therebetween, to form capacitance together with the dielectric layer 111.

The internal electrodes 121 and 122 may include the first and second internal electrodes 121 and 122. The first and second internal electrodes 121 and 122 may be alternately disposed to oppose each other with the dielectric layers 111, constituting the body 110, interposed therebetween, and may be exposed from the third and fourth surfaces 3 and 4 of the body 110, respectively. Specifically, one end of the first internal electrode 121 may be connected to the third surface, and one end of the second internal electrode 122 may be connected to the fourth surface.

As illustrated in FIG. 2, the first internal electrode 121 may be spaced apart from the fourth surface 4, and may be exposed through the third surface 3, and the second internal electrode 122 may be spaced apart from the third surface 3, and may be exposed through the fourth surface 4. The first external electrode 130 may be disposed on the third surface 3 of the body 110 and connected to the first internal electrode 121, and the second external electrode 140 may be disposed on the fourth surface 4 of the body 110 and connected to the second internal electrode 122.

For example, the first internal electrode 121 may not be connected to the second external electrode 140, but may be connected to the first external electrode 130, and the second internal electrode 122 may not be connected to the first external electrode 130, but may be connected to the second external electrode 140. Therefore, the first internal electrode 121 may be formed at a certain distance apart from the fourth surface 4, and the second internal electrode 122 may be formed at a certain distance apart from the third surface 3. In this case, the first and second internal electrodes 121 and 122 may be electrically separated from each other by the dielectric layer 111 interposed therebetween.

A material for forming the internal electrodes 121 and 122 is not particularly limited, and a material having excellent electrical conductivity may be used. For example, the internal electrodes 121 and 122 may include nickel (Ni), copper (Cu), palladium (Pd), silver (Ag), gold (Au), platinum (Pt), tin (Sn), tungsten (W), titanium (Ti), and alloys thereof.

In addition, the internal electrodes 121 and 122 may be formed by printing a conductive paste for the internal electrodes containing one or more of nickel (Ni), copper (Cu), palladium (Pd), silver (Ag), gold (Au), platinum (Pt), tin (Sn), tungsten (W), titanium (Ti), and alloys thereof, on the ceramic green sheets. As a printing method of the conductive paste for the internal electrodes, a screenprinting method, a gravure printing method, or the like may be used, but the present disclosure is not limited thereto.

An average thickness te of the internal electrodes 121 and 122 is not particularly limited, and may vary depending on the purpose. To miniaturize the multilayer electronic component 100, the average thickness te of the internal electrodes 121 and 122 may be 0.35 um or less, and to improve reliability of the multilayer electronic component 100 under high temperature and high pressure, the average thickness te of the internal electrodes 121 and 122 may be 3 um or more.

The average thickness te of the internal electrodes 121 and 122 may be determined by defining five points, one reference point, two points to the left thereto, and two points to the right thereto, at equal intervals around the one reference point, measuring thicknesses of the points, and calculating an average value therefrom, based on a point in which a length direction center line of the body and a thickness direction center line of the body meet, for a total of five dielectric layers, including one internal electrode layer, two internal electrode layers thereon, and two internal electrode layers therebelow, based on the one internal electrode layer provided at the point at which the length direction center line of the body and the thickness direction center line of the body meet, among internal electrode layers extracted from an image acquired by scanning a cross-section in length and thickness directions (L-T) cut from a central portion in a width direction of the body 110 using a scanning electron microscope (SEM).

Referring to FIGS. 2 and 4, the body 110 may include a capacitance formation portion Ac disposed in the body 110 and which may be a region in which the first and second internal electrodes 121 and 122 overlap in the first direction.

The capacitance forming portion Ac may be a portion that contributes to forming the capacitance of the capacitor, and may be formed by repeatedly stacking a plurality of first and second internal electrodes 121 and 122 with the dielectric layer 111 interposed, as illustrated in FIG. 5.

An upper cover portion 112 may be disposed on one surface of the capacitance forming portion Ac in the first direction, and a lower cover portion 113 may be disposed on the other surface of the capacitance forming portion Ac in the first direction.

The upper cover portion 112 and the lower cover portion 113 may be formed by stacking a single dielectric layer 111 or two or more dielectric layers 111 on upper and lower surfaces of the capacitance forming portion Ac in the first direction, respectively, and may basically play a role in preventing damage to the internal electrodes due to physical or chemical stress.

The upper cover portion 112 and the lower cover portion 113 may not include the internal electrodes, and may include the same material as the dielectric layer 111.

For example, the upper cover portion 112 and the lower cover portion 113 may include a ceramic material, and may include, for example, a barium titanate (BaTiO₃)-based ceramic material.

A thickness tc of each of the cover portions 112 and 113 does not need to be particularly limited. To more easily achieve miniaturization and high capacitance of the multilayer electronic component, the thickness tc of each of the cover portions 112 and 113 may be 15 um or less. In this case, an average thickness of the cover portions 112 and 113 may mean an average thickness of each of the first cover portion 112 and the second cover portion 113.

The average thickness tc of the cover portions 112 and 113 may mean a size in the first direction, and may be an average value of sizes of the cover portions 112 and 113 measured at five points at equal intervals above or below the capacitance forming portion Ac in the first direction.

Referring to FIG. 4, margin portions 114 and 115 may be disposed on one surface and the other surface of the capacitance forming portion Ac in the third direction.

The margin portions 114 and 115 may include a margin portion 114 disposed on the fifth surface 5 of the body 110, and a margin portion 115 disposed on the sixth surface 6. For example, the margin portions 114 and 115 may be disposed on both side surfaces of the body 110 in the width direction.

As illustrated in FIG. 4, the margin portions 114 and 115 may refer to regions between both ends of the first and second internal electrodes 121 and 122 and a boundary surface of the body 110, in a cross-section of the body 110 in width-thickness (W-T) directions.

The margin portions 114 and 115 may basically serve to prevent damage to the internal electrodes due to physical or chemical stress.

The margin portions 114 and 115 may be prepared by applying a conductive paste on a ceramic green sheet to form the internal electrodes, except for regions in which the margin portions are formed.

Additionally, to suppress occurrence of a step difference caused by the internal electrodes 121 and 122, after stacking, the internal electrodes may be cut to expose the fifth and sixth surfaces 5 and 6 of the body, and then a single dielectric layer or two or more dielectric layers may be stacked on both side surfaces of the capacitance forming portion Ac in the width direction, to form the margin portions 114 and 115.

Widths of the margin portions 114 and 115 does not need to be particularly limited. For example, to more easily achieve miniaturization and high capacitance of the multilayer electronic component, average widths of the margin portions 114 and 115 may be 15 um or less, respectively.

The average widths of the margin portions 114 and 115 may mean an average size of the margin portions 114 and 115 in the third direction, and may be an average value of sizes of the margin portions 114 and 115, in the third direction, measured at five points at equal intervals on the side surface of the capacitance forming portion Ac.

The external electrodes 130 and 140 may be disposed on the body 110.

The external electrodes 130 and 140 may be disposed on the third surface 3 and the fourth surface 4, which may be surfaces facing in the second direction, perpendicular to the first direction of the body 110, to be connected to the internal electrodes 121 and 122. Specifically, the first external electrode 130 may be disposed on the third surface 3, which may be one surface facing the second direction, perpendicular to the first direction of the body 110, to be connected to the first internal electrode 121, and the second external electrode 140 may be disposed on the fourth surface 4, which may be the other surface facing the second direction, perpendicular to the first direction of the body 110, to be connected to the second internal electrode 122.

In the present embodiment, a structure in which the multilayer electronic component 100 may have two external electrodes 130 and 140 may be described, but the number, shapes, or the like of the external electrodes 130 and 140 may be changed, depending on shapes of the internal electrodes 121 and 122, or other purposes.

Referring to FIG. 2, the first external electrode 130 may include the first connection portion A1 disposed on the third surface 3, and the first band portion B1 extending from the first connection portion A1 to a portion of the first surface 1 and a portion of the second surface 2, and the second external electrode 140 may include the second connection portion A2 disposed on the fourth surface 4, and the second band portion B2 extending from the second connection portion A2 to a portion of the first surface 1 and a portion of the second surface 2.

Referring to FIGS. 2 and 3, the first connection portion A1 may refer to a region in which the first external electrode 130 is disposed on the third surface 3, and the second connection portion A2 may refer to a region in which the second external electrode 140 is disposed on the fourth surface 4.

Referring to FIGS. 2 and 3, the first band portion B1 may refer to a region in which the first external electrode 130 extends from the first connection portion A1 to a portion of the first surface 1 and a portion of the second surface 2. The second band portion B2 may refer to a region in which the second external electrode 140 extends from the second connection portion A2 to a portion of the first surface 1 and a portion of the second surface 2.

In an embodiment, the first external electrode 130 may include a first edge portion C1, and the second external electrode 140 may include a second edge portion C2. Referring to FIG. 2, the first edge portion C1 may refer to a region of the first external electrode 130 connecting the first connection portion A1 and the first band portion B1, and the second edge portion C2 may refer to a region of the second external electrode 140 connecting the second connection portion A2 and the second band portion B2.

In FIG. 2, the first and second band portions B1 and B2 are illustrated to extend from the first and second connecting portions A1 and A2 to a portion of the first surface 1 and a portion of the second surface 2, but the present disclosure is not limited thereto, and the first and second band portions B1 and B2 may extend from the first and second connection portions A1 and A2 to portions of the first, second, fifth, and sixth surfaces 1, 2, 5, and 6.

The first external electrode 130 may include the first electrode layer 131 connected to the first internal electrode 121, and the first conductive resin layer 132 disposed on the first electrode layer 131 in the first band portion B1 and including a second conductive metal and a thermosetting resin, and the second external electrode 140 may include the second electrode layer 141 connected to the second internal electrode 122, and the second conductive resin layer 142 disposed on the second electrode layer 141 in the second band portion B2 and including the second conductive metal and the thermosetting resin.

The first electrode layer 131 may be connected to the first internal electrode 121, and the second electrode layer 141 may be connected to the second internal electrode 122, to ensure electrical continuity. For example, the first electrode layer 131 may be in contact with the first internal electrode 121, and the second electrode layer 141 may be in contact with the second internal electrode 122.

The first electrode layer 131 may be continuously disposed on the first connection portion A1, the first edge portion C1, and the first band portion B1 of the first external electrode 130, but the first edge portion C1 and the second band portion B1 may not necessarily be disposed. Likewise, the second electrode layer may be continuously disposed on the second connection portion A2, the second edge portion C2, and the second band portion B2 of the second external electrode 140, but the second edge portion C2 and the second band portion B2 may not necessarily be disposed.

The first electrode layer 131 and the second electrode layer 141 may include a first conductive metal and glass. As the first conductive metal, a material having excellent electrical conductivity may be used, but the present disclosure is not specifically limited thereto. For example, the first conductive metal may be one or more of nickel (Ni), copper (Cu), and alloys thereof.

A method of forming the first electrode layer 131 and the second electrode layer 141 may not be particularly limited. For example, the method may be performed by dipping a conductive paste including the first conductive metal and the glass onto the third surface 3 and the fourth surface 4 of the body 110, or transferring and sintering a sheet including the first conductive metal and the glass onto the third surface 3 and the fourth surface 4 of the body 110.

The first conductive resin layer 132 and the second conductive resin layer 142 may include a second conductive metal and a thermosetting resin. A type of the second conductive metal included in the first conductive resin layer 132 and the second conductive resin layer 142 is not particularly limited, and may be formed of at least one of Cu, Ag, and Sn, or an alloy of two or more. The second conductive metal included in the first conductive resin layer 132 and the second conductive resin layer 142 may be formed in a spherical shape or a flake shape.

The thermosetting resin included in the first conductive resin layer 132 and the second conductive resin layer 142 is not particularly limited as long as it has bonding properties and shock absorption properties, and may be mixed with the second conductive metal powder to form a paste, and may, for example, include an epoxy-based resin.

A method of forming the first conductive resin layer 132 and the second conductive resin layer 142 is not particularly limited, but the method may be performed by forming the first electrode layer 131 and the second electrode layer 141, and forming the first conductive resin layer 132 and the second conductive resin layer 142 on the first and second electrode layers 131 and 141 in the band portions B1 and B2.

A method of controlling a region in which the first conductive resin layer 132 and the second conductive resin layer 142 are formed is not particularly limited. For example, the method may be adjusted by forming the first electrode layer 131 and the second electrode layer 141, and separately masking a region in which the first conductive resin layer 132 and the second conductive resin layer 142 are not formed.

When, to thin the external electrode in the multilayer electronic component, the conductive resin layer is formed on the first and second surfaces 1 and 2 of the body 110, the electrode layer is formed on the third and fourth surfaces 3 and 4 of the body 110, and the electrode layer is formed as a sintered electrode including glass, a problem in which the conductive resin layer is combusted due to sintering of the electrode layer may occur.

When, to prevent combustion of the conductive resin layer, the plating layer is formed on the third and fourth surfaces 3 and 4 of the body 110, and the conductive resin layer is formed on the first and second surfaces 1 and 2 of the body 110, the plating layer may be formed directly on the third and fourth surfaces 3 and 4 of the body 110 in which a ceramic component included in the dielectric layer is present. Therefore, it may be difficult to form a thin and uniform plating layer, and damage to the body 110 may occur due to an acidic solution included in the plating solution.

In an embodiment of the present disclosure, since the first external electrode 130 may include the first electrode layer 131 connected to the first internal electrode 121, and the first conductive resin layer 132 disposed on the first electrode layer 131 in the first band portion B1 and including a second conductive metal and a thermosetting resin, and the second external electrode 140 may include the second electrode layer 141 connected to the second internal electrode 122, and the second conductive resin layer 142 disposed on the second electrode layer 141 in the second band portion B2 and including the second conductive metal and the thermosetting resin, even when the first and second electrode layers 131 and 141 include the first conductive metal and the glass, a phenomenon in which the first and second conductive resin layers 132 and 142 are combusted due to formation of the first and second electrode layers 131 and 141 may be suppressed.

The first conductive resin layer 132 may not be disposed on the first connection portion A1, and the second conductive resin layer 142 may not be disposed on the second connection portion A2. Therefore, while sufficiently improving bending strength of the multilayer electronic component, it is possible to suppress an increase in equivalent series resistance (ESR) due to excessive formation of the first and second conductive resin layers 132 and 142.

In an embodiment, the first conductive resin layer 132 may cover at least a portion of the first electrode layer 131 in the first edge portion C1, and the second conductive resin layer 142 may cover at least a portion of the second electrode layer 141 in the second edge portion C2. Therefore, bending strength of the multilayer electronic component 100 may be further improved.

In an embodiment, the first conductive resin layer may be disposed to not exceed an extension line E1 of the first surface and an extension line E2 of the second surface, and the second conductive resin layer may be disposed not to exceed the extension line E1 of the first surface and the extension line E2 of the second surface. Therefore, bending strength of the multilayer electronic component 100 may be further improved, and an increase in equivalent series resistance (ESR) of the multilayer electronic component 100 may be suppressed.

In an embodiment, the first external electrode 130 may further include a first plating layer 133, and the second external electrode 140 may further include a second plating layer 143.

The first plating layer 133 may include Ni, and may be disposed on the first conductive resin layer 132, and the second plating layer 143 may include Ni, and may be disposed on the second conductive resin layer 142.

In this case, the first external electrode 130 may be disposed on the first plating layer 133, and may further include a third plating layer 134 including Sn, and the second external electrode 140 may be disposed on the second plating layer 143, and may further include a fourth plating layer 144 including Sn.

The first to fourth plating layers 133, 143, 134, and 144 may serve to improve mounting characteristics of the multilayer electronic component 100, and in particular, the first plating layer 133 and the second plating layer 134 may serve to improve heat resistance and sealing properties.

The first and second plating layers 133 and 143 may cover the first and second electrode layers 131 and 141 and the first and second conductive resin layers 132 and 142, to further improve mounting characteristics and heat resistance. Specifically, the first plating layer 133 may cover the first electrode layer 131 and the first conductive resin layer 132, and the second plating layer 143 may cover the second electrode layer 141 and the second conductive resin layer 142.

A size of the multilayer electronic component 100 does not need to be particularly limited.

To simultaneously achieve miniaturization and high capacitance, thicknesses of the dielectric layer and internal electrodes should be thinned to increase the number of stacks. In the multilayer electronic component 100 having a size of 0201 (length × width, 0.2 mm × 0.1 mm) or less, it may be difficult to ensure humidity resistance reliability.

Therefore, considering manufacturing errors, external electrode sizes, etc., when a length of the multilayer electronic component 100 is 0.22 mm or less and a width thereof is 0.11 mm or less, an effect of improving reliability according to the present disclosure may be more significant. In this case, the length of the multilayer electronic component 100 may refer to a maximum size of the multilayer electronic component 100 in the second direction, and the width of the multilayer electronic component 100 may refer to a maximum size of the multilayer electronic component 100 in the third direction.

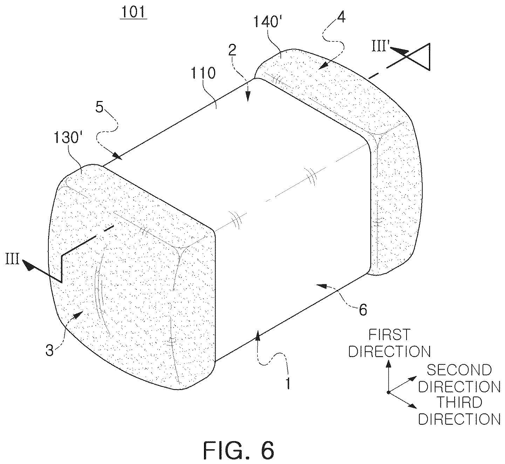

FIG. 6 is a perspective view schematically illustrating a multilayer electronic component according to another embodiment of the present disclosure.

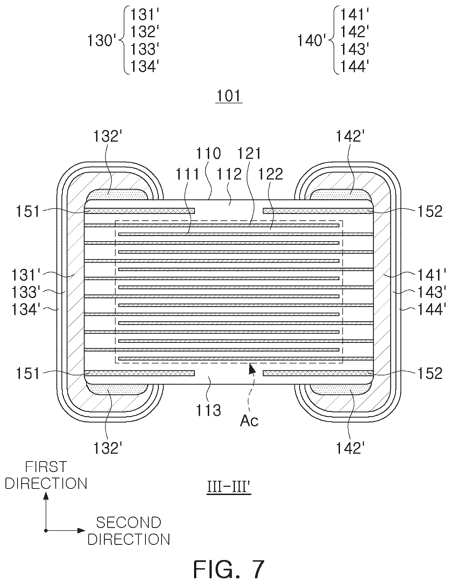

FIG. 7 is a cross-sectional view of FIG. 6, taken along line III-III'.

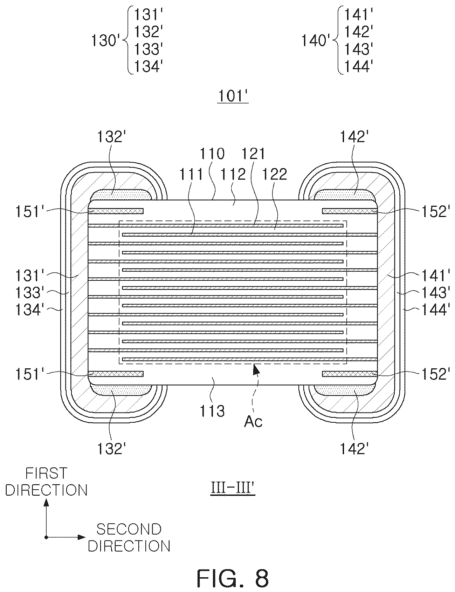

FIG. 8 is a cross-sectional view of a multilayer electronic component according to an embodiment, corresponding to FIG. 7.

Hereinafter, with reference to FIGS. 6 to 8, a multilayer electronic component 101 and various embodiments thereof according to another embodiment of the present disclosure will be described in detail. However, descriptions overlapping the multilayer electronic component 100 and various embodiments thereof according to an embodiment of the present disclosure will be omitted.

A multilayer electronic component 101 according to another embodiment of the present disclosure may include a body 110 including a dielectric layer 111 and first and second internal electrodes 121 and 122 alternately disposed with the dielectric layer in a first direction, and including a first surface 1 and a second surface 2 opposing each other in the first direction, a third surface 3 and a fourth surface 4, connected to the first and second surfaces and opposing each other in a second direction, and a fifth surface 5 and a sixth surface 6, connected to the first to fourth surfaces and opposing each other in a third direction; and external electrodes 130' and 140' disposed on the body, wherein the external electrodes include conductive resin layers 132' and 142' disposed on the first and second surfaces, and electrode layers 131' and 141' disposed on the third and fourth surfaces to extend from the third and fourth surfaces onto the conductive resin layers and including no glass, the body includes a capacitance forming portion Ac overlapping the first and second internal electrodes in the first direction, and cover portions 112' and 113' disposed on one surface and the other surface of the capacitance forming portion in the first direction, and the cover portions include a first cover electrode 151 and a second cover electrode 152, spaced apart from each other in the second direction.

The external electrodes 130' and 140' of the multilayer electronic component 101 according to another embodiment of the present disclosure may include the conductive resin layers 132' and 142' disposed on the first and second surfaces 1 and 2, and the electrode layers 131' and 141' disposed on the third and fourth surfaces 3 and 4 to extend from the third and fourth surfaces 3 and 4 onto the conductive resin layers 132' and 142' and including no glass. In some embodiments, the electrode layers 131' and 141' may be free of glass.

Referring to FIGS. 6 and 7, the external electrodes 130' and 140' may include the conductive resin layers 132' and 142' disposed on the first and second surfaces 1 and 2 of the body 110 and including a second conductive metal and a thermosetting resin.

The conductive resin layers 132' and 142' may be disposed on the first and second surfaces 1 and 2 of the body 110 to improve bending strength of the multilayer electronic component 101. In addition, since the electrode layers 131' and 141', which will be described later, are arranged to extend over the conductive resin layers 132' and 142', even when the electrode layers 131' and 141' are plating layers not including glass, bending strength of the multilayer electronic component 101 may be sufficiently improved.

In addition, the external electrodes 130' and 140' may include the electrode layers 131' and 141' disposed on the third and fourth surfaces 3 and 4 to extend from the third and fourth surfaces 3 and 4 onto the conductive resin layers 132' and 142' and including no glass.

The electrode layers 131' and 141' may be disposed on the third and fourth surfaces 3 and 4, may be connected to the internal electrodes 121 and 122, and may extend onto the conductive resin layers 132' and 142', to improve mechanical strength of the external electrodes 130' and 140' and bending strength of the multilayer electronic component 101. In an embodiment, the electrode layers 131' and 141' may cover the conductive resin layers 132' and 142', and thus mechanical strength of the external electrodes 130' and 140' may be further improved.

A method of forming the electrode layers 131' and 141' is not particularly limited. For example, the electrode layers 131' and 141' may be prepared by forming the conductive resin layers 132' and 142', and then plating a first conductive metal on the third surface 3 and the fourth surface 4 of the body and the conductive resin layers 132' and 142'. A method of plating the electrode layers 131' and 141' is not particularly limited.

When the electrode layers 131' and 141' not including glass are formed directly on the third and fourth surfaces 3 and 4 of the body 110, formation of the body 110 in the third direction may be smoothly performed, but formation of the body 110 in the first direction may not be smoothly performed. In particular, since an amount of a conductive material is small in a cover portion from which an internal electrode is not exposed, it may be more difficult to form the electrode layers 131' and 141' not including glass.

Therefore, in another embodiment of the present disclosure, the cover portions 112' and 113' disposed on one surface and the other surface of the capacitance forming portion Ac in the first direction may include the cover electrodes 151 and 152 connected to the electrode layers 131' and 141', to smoothly form the electrode layers 131' and 141' entirely on the third and fourth surfaces 3 and 4 of the body 110, and thus thinning of the external electrodes 130' and 140' may be easily achieved.

In an embodiment, the cover electrodes 151 and 152 may include the first cover electrode 151 and the second cover electrode 152, spaced apart from each other in the second direction. Therefore, even when the cover electrodes 151 and 152 are connected to the electrode layers 131' and 141', it is possible to prevent the cover electrodes 151 and 152 from being short-circuited.

In this case, the first cover electrode 151 may be in contact with the first electrode layer 131', and the second cover electrode 152 may be in contact with the second electrode layer 141'. Therefore, areas of contacting the first cover electrode 151 and the second cover electrode 152 with the first electrode layer 131' and the second electrode layer 141' may increase to improve an effect of smoothly forming the electrode layers 131' and 141' on the entire third and fourth surfaces 3 and 4 of the body 110.

In an embodiment, the first cover electrode 151 may be included in both the upper cover portion 112 and the lower cover portion 113, and the second cover electrode 152 may be included in both the upper cover portion 112 and the lower cover portion 113. Therefore, the effect of smoothly forming the entire third and fourth surfaces 3 and 4 of the body 110 may be improved.

There may be no need to specifically limit lengths of the cover electrodes 151 and 152.

Referring to FIG. 7, the cover electrodes 151 and 152 may be longer than the conductive resin layers 132' and 142'. Therefore, it is possible to suppress a phenomenon of propagating cracks occurring at boundaries between the body 110 and the external electrodes 130' and 140', or the like, to reach the capacitance forming portion Ac. Specifically, if a distance between ends of the conductive resin layers 132' and 142' in the second direction is Lr and a distance between ends of the cover electrodes 151 and 152 in the second direction is Lc, Lr < Lc may be satisfied.

Referring to FIG. 8, in a multilayer electronic component 101' according to an embodiment, lengths of cover electrodes 151' and 152' may be shorter than lengths of conductive resin layers 132' and 142'. In this case, a phenomenon of propagating cracks occurring at boundaries between a body 110 and external electrodes 130' and 140', or the like, to reach a capacitance forming portion Ac may be somewhat weak, but a penetration path of external moisture may be reduced. Therefore, moisture resistance reliability of the multilayer electronic component 101' may be improved. Specifically, if a distance between ends of the conductive resin layers 132' and 142' in the second direction is Lr' and a distance between ends of the cover electrodes 151 and 152 in the second direction is Lc', Lr' > Lc' may be satisfied.

Lengths Lr, Lc, Lr', and Lc' may be measured by, for example, a scanning electron microscope (SEM). Other methods and/or tools appreciated by one of ordinary skill in the art, even if not described in the present disclosure, may also be used.

In an embodiment, the external electrodes 130' and 140' may further include plating layers 133' and 143' disposed on electrode layers 131' and 141' and including Ni.

In this case, the external electrodes 130' and 140' may further include plating layers 134' and 144' disposed on the plating layers 133' and 143' including Ni, and including Sn.

The plating layers 133' and 143' including Ni and the plating layers 134' and 144' including Sn may serve to improve mounting characteristics of the multilayer electronic component 101, and in particular, the plating layers 133' and 143' including Ni may serve to improve heat resistance and sealing properties.

The plating layers 133' and 143' including Ni may cover the electrode layers 131' and 141' to further improve mounting characteristics and heat resistance.

The present disclosure is not limited by the above-described embodiments and accompanying drawings, but is intended to be limited by the appended claims. Therefore, various forms of substitution, modification, and change will be possible by those skilled in the art within the scope of the technical spirit of the present disclosure described in the claims, and this will also be said to fall within the scope of the present disclosure.

In addition, the expression 'an embodiment' used in this specification does not mean the same embodiment, and may be provided to emphasize and describe different unique characteristics. However, an embodiment presented above may not be excluded from being implemented in combination with features of another embodiment. For example, although the description in a specific embodiment is not described in another example, it can be understood as an explanation related to another example, unless otherwise described or contradicted by the other embodiment.

The terms used in this disclosure are used only to illustrate various examples and are not intended to limit the present inventive concept. Singular expressions include plural expressions unless the context clearly dictates otherwise.

One of many effects of the present disclosure is that an external electrode may include a conductive resin layer disposed on an electrode layer in a band portion, but the conductive resin layer may not be disposed on a connection portion, such that the electrode layer may include glass.

One of many effects of the present disclosure is to include a cover electrode layer connected to an external electrode in a cover portion, to grow smoothly a plating layer on the cover portion, even when plating is performed directly on a side surface of a body.

However, various advantages and effects of the present disclosure are not limited to the above-described contents, and can be more easily understood in a process of explaining specific embodiments of the present disclosure.

While example embodiments have been illustrated and described above, it will be apparent to those skilled in the art that modifications and variations could be made without departing from the scope of the present disclosure as defined by the appended claims.

## Claims

1. A multilayer electronic component comprising:
a body including a dielectric layer and first and second internal electrodes alternately disposed with the dielectric layer in a first direction, the body including a first surface and a second surface opposing each other in the first direction, a third surface and a fourth surface, connected to the first and second surfaces and opposing each other in a second direction, and a fifth surface and a sixth surface, connected to the first to fourth surfaces and opposing each other in a third direction;
a first external electrode including a first connection portion disposed on the third surface, and a first band portion extending from the first connection portion onto a portion of the first surface and a portion of the second surface; and
a second external electrode including a second connection portion disposed on the fourth surface, and a second band portion extending from the second connection portion onto a portion of the first surface and a portion of the second surface,
wherein the first external electrode includes a first electrode layer connected to the first internal electrode, and a first conductive resin layer disposed on the first electrode layer in the first band portion, the first conductive resin layer including a second conductive metal and a thermosetting resin,
the second external electrode includes a second electrode layer connected to the second internal electrode, and a second conductive resin layer disposed on the second electrode layer in the second band portion, the second conductive resin layer including the second conductive metal and the thermosetting resin,
the first electrode layer and the second electrode layer include a first conductive metal and glass,
the first conductive resin layer is not disposed on the first connection portion, and
the second conductive resin layer is not disposed on the second connection portion.

2. The multilayer electronic component of claim 1, wherein the first electrode layer is in contact with the first internal electrode, and the second electrode layer is in contact with the second internal electrode.

3. The multilayer electronic component of claim 1, wherein, a portion connecting the first connection portion and the first band portion is a first edge portion, and a portion connecting the second connection portion and the second band portion is a second edge portion,
the first conductive resin layer covers at least a portion of the first electrode layer in the first edge portion, and
the second conductive resin layer covers at least a portion of the second electrode layer at the second edge portion.

4. The multilayer electronic component of claim 1, wherein the first conductive resin layer is disposed to not extend beyond an extension line of the first surface and an extension line of the second surface, and
the second conductive resin layer is disposed to not extend beyond the extension line of the first surface and the extension line of the second surface.

5. The multilayer electronic component of claim 1, wherein the first external electrode further comprises a first plating layer disposed on the first conductive resin layer, the first plating layer including Ni, and
the second external electrode further comprises a second plating layer disposed on the second conductive resin layer, the second plating layer including Ni.

6. The multilayer electronic component of claim 5, wherein the first plating layer covers the first electrode layer and the first conductive resin layer, and
the second plating layer covers the second electrode layer and the second conductive resin layer.

7. The multilayer electronic component of claim 5, wherein the first external electrode further comprises a third plating layer disposed on the first plating layer, the third plating layer including Sn, and
the second external electrode further comprises a fourth plating layer disposed on the second plating layer, the fourth plating layer including Sn.

8. The multilayer electronic component of claim 2, wherein the first electrode layer directly contacts the first internal electrode.

9. The multilayer electronic component of claim 1, wherein an end of the first conductive resin layer is disposed on a corner of the first electrode layer.

10. The multilayer electronic component of claim 1, wherein the first electrode layer is a sintered electrode.
